# EUROPÄISCHE PATENTSCHRIFT

(11) **EP 0 449 265 B1**
(45) Veröffentlichungstag und Bekanntmachung des Hinweises auf die Patenterteilung: **28.05.1997**
(21) Anmeldenummer: 91104900.5
(22) Anmeldetag: 27.03.1991
(51) Int. Cl.: H04L 9/22, G06F 7/58

(54) **Zufallszahlengenerator**
Random number generator
Générateur de nombres aléatoires

(30) Priorität: 30.03.1990 DE 4010305
(43) Veröffentlichungstag der Anmeldung: 02.10.1991
(73) Patentinhaber: GAO Gesellschaft für Automation und Organisation mbH, 81307 München (DE)
(72) Erfinder: Albert, Bodo, W-8000 München 71 (DE); Vedder, Klaus, W-8000 München 40 (DE)
(74) Vertreter: Klunker . Schmitt-Nilson . Hirsch

(56) Entgegenhaltungen:
- EP-A- 0 023 074
- EP-A- 0 281 057
- US-A- 3 993 872
- PROCEEDINGS OF THE FOURTH AEROSPACE COMPUTER SECURITY APPLICATIONS CONFERENCE, 12.-16. Dezember 1988, Orlando, FLA, USA, IEEE, New York, SS 410-412; P. GOYAL ET AL.: 'ENCRYPTION USING RANDOM KEYS. A SCHEME FOR SECURE COMMUNICATIONS'

## Beschreibung

Die Erfindung betrifft ein Verfahren zur Erzeugung von Zufallszahlen mit einer Verarbeitungseinheit, die bei jeder Anforderung aus Eingangsgrößen eine Zufallszahl ermittelt und einem Speicher, in dem die Eingangsgrößen abgelegt sind.

Die Erzeugung von Zufallszahlen ist in kryptographischen Systemen von wesentlicher Bedeutung, sei es zur Erzeugung von Schlüsseln oder auch zur Dynamisierung von schlüsselungsprozessen. Dabei. Die Güte eines Zufallszahlengenerators und damit auch der Zufallszahlen selbst entscheidend für die Sicherheit der kryptographischen Prozesse. Die Güte eines Zufallszahlengenerators ist, vereinfacht gesagt, umso höher, je geringer die Wahrscheinlichkeit ist, eine Zufallszahl vorherzusagen und je geringer die funktionale Verkettung der Zufallszahlen untereinander ist. Die Güte eines Zufallszahlengenerators läßt sich mit aufwendigen statistischen Methoden berechnen, worauf hier aber nicht näher eingegangen werden soll.

Es ist seit langem bekannt, als Zufallszahlengenerator einen Algorithmus zu verwenden, der ausgehend von einem Startwert unter Verwendung eines Schlüssels eine Zahl erzeugt, die bei qualitativ hochwertigen Algorithmen zufälligen Charakter hat. Ein Zufallszahlengenerator solcher Art ist beispielsweise aus der EP 281 057 bekannt, wobei dieser Generator in ein Datenverarbeitungssystem implementiert ist, bestehend aus einer sogenannten Chipkarte und einem Terminal. Der Algorithmus ist in der Verarbeitungseinheit (Mikroprozessor) der Chipkarte, die auch die notwendigen Speicherbausteine aufweist, vorgesehen. Gemäß den Vorschlägen der EP 281 057 wird der Startwert jeweils bei der Generierung einer Zufallszahl verändert. Dieser variable Startwert kann aus dem Ausgangssignal eines im integrierten Baustein implementierten Echtzeituhrenbausteins oder auch aus im Chip gespeicherten Daten gewonnen werden. Da die Startwerte jeweils bei der Generierung von Zufallszahlen ermittelt werden, ist der Zeitpunkt ihrer Erzeugung für einen Außenstehenden bekannt. Damit ist aber auch die als Startwert verwendete Information grundsätzlich vorhersagbar, wenn beispielsweise die Information aus dem Ausgangssignal eines Uhrenbausteins gewonnen wird.

Die Aufgabe der Erfindung besteht deshalb darin, die an die Erzeugung von Zufallszahlen gestellten Sicherheitsanforderungen gegenüber bekannten Verfahren weiter zu erhöhen.

Die Aufgabe wird durch die im Hauptanspruch angegebenen Merkmale gelöst.

Gemäß einer Ausführungsform der Erfindung ermittelt die Verarbeitungseinheit, jeweils ausgelöst durch ein von außen der Verarbeitungseinheit zugeführtes Triggersignal, den Augenblickswert eines asynchron zur Berechnung von Zufallszahlen laufenden Zählers und verknüpft diesen Wert mit wenigstens einem Teil der Eingangsgrößen. Das von außen zugeführte Trägersignal kann beispielsweise durch eine beliebige Eingabe auf einer Tastatur, die über eine Schnittstelle mit der Verarbeitungseinheit verbunden ist, ausgelöst werden. Derartige Tastaturen sind im allgemeinen bei jedem Datenverarbeitungssystem vorgesehen. Welche der diversen Eingaben, die im Dialog mit dem System notwendig sind, das Triggersignal auslösen, kann durch entsprechende Programmierung der Verarbeitungseinheit nahezu beliebig definiert werden. Der auf diese Weise modifizierte Eingangswert dient bei der nächstfolgenden forderung einer Zufallszahl und der dann folgenden rechnung als Startwert.

Die Verarbeitung eines unabhängig von der eigentlichen Erzeugung von Zufallszahlen entstandenen und nicht vorhersagbaren Wertes erhöht die Güte der Zufallszahlen im Hinblick auf deren Vorhersagbarkeit und deren funktionelle Verkettung.

Weitere Vorteile und Weiterbildungen der Erfindung ergeben sich aus den Unteransprüchen und der nachfolgenden Beschreibung der Ausführungsbeispiele anhand der Figuren. Darin zeigen:
- Fig. 1: ein stark schematisiertes Blockschaltbild zur Erläuterung des erfindungsgemäßen Verfahrens und
- Fig. 2: ein detailliertes Funktionsschema zur Erzeugung von Zufallszahlen gemäß einer spielhaften Ausführungsform.

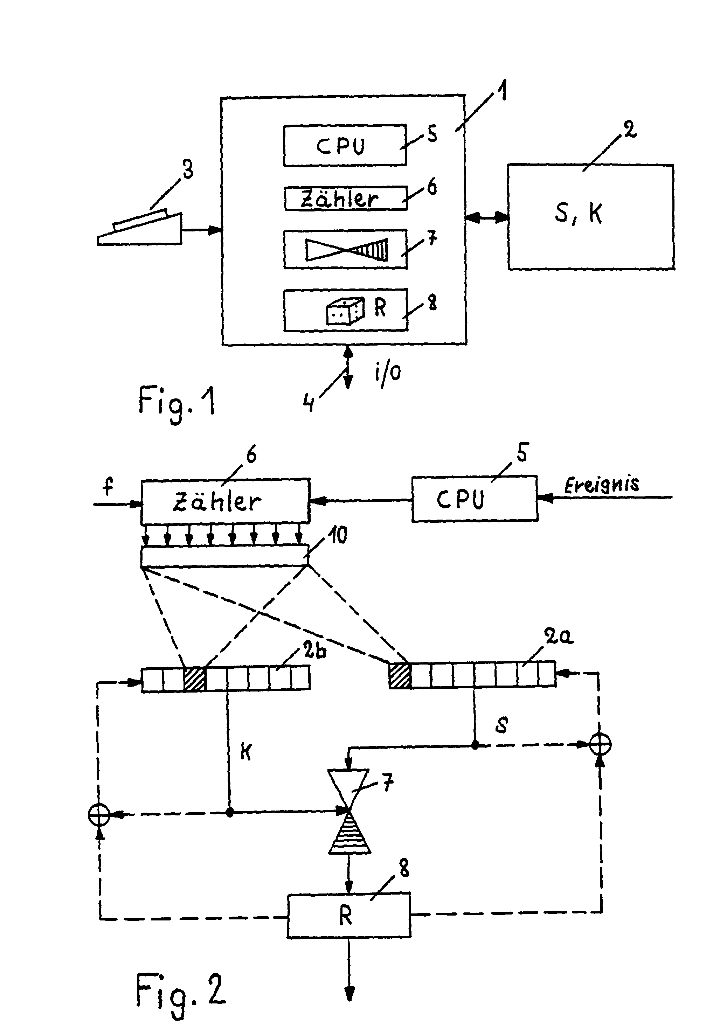

Die Fig. 1 zeigt in stark schematisierter Form eine Schaltungseinheit zur Erzeugung von Zufallszahlen nach dem erfindungsgemäßen Verfahren.

Die Schaltungseinheit besteht in dem gezeigten Ausführungsbeispiel aus einer Verarbeitungs- oder Steuereinheit 1, einem Speicher 2 und einer mit der Steuereinheit verbundene Tastatur 3. Der Datentransfer der Steuereinheit mit peripheren Einrichtungen wird in bekannter Weise über eine bidirektionale Schnittstelle 4 durchgeführt. Die Steuereinheit enthält einen Chiffrieralgorithmus 7, der bei entsprechender Anforderung über die bidirektionale Schnittstelle 4 aus einem Startwert S und einer Schlüsselinformation K, die im Speicher 2 abgelegt sind, eine Zufallszahl R erzeugt. Die jeweils letzte Zufallszahl wird in einem Register 8 zwischengespeichert und kann für Prozesse in der Verarbeitungseinheit, aber auch über die Schnittstelle 4 für periphere Einrichtungen abgerufen werden. Die in der Verarbeitungseinheit ablaufenden Vorgänge werden von einem Mikroprozessor 5 gesteuert. Neben den erwähnten Komponenten ist in der Verarbeitungseinheit zusätzlich ein Zähler vorgesehen. Dieser Zähler kann als Hard- aber auch als Softwarezähler realisiert werden. In beiden Fällen wird der Zähler unabhängig von den Steuerungsaufgaben des Mikroprozessors und damit auch unabhängig von der Erzeugung von Zufallszahlen fortlaufend inkrementiert. Der Zähler ist nicht rücksetzbar, noch kann sein jeweiliger Stand zu einem bestimmten Zeitpunkt vorhergesagt werden. Um nun zumindest Teile des Start- oder auch Schlüsselwertes entsprechend dem erfindungsgemäßen Verfahren modifizieren zu können, wird zum Zeitpunkt eines von außen der Steuereinheit zugeführten und vom Mikroprozessor detektierten Ereignisses der augenblickliche Zählerstand zwischengespeichert, während der Zähler weiterläuft. Der zwischengespeicherte Wert wird daraufhin benutzt, um die im Speicher 2 abgelegten Werte zu modifizieren. Diese Vorgänge sind unabhängig von der Erzeugung einer Zufallszahl.

Ein die Modifikation auslösendes Ereignis kann eine bestimmte Eingabe auf der Tastatur sein, beispielsweise die Betätigung der bei diesen Tastaturen gebräuchlichen Bestätigungstaste. Es ist auch möglich, die Augenblickswerte zweier aufeinanderfolgender Tastatureingaben unter Umständen verknüpft als Wert für die Modifikation einzusetzen. Es sind weitere Möglichkeiten denkbar, die hier nicht im einzelnen aufgezählt werden sollen. Wesentlich ist, daß durch die geschilderte Vorgehensweise eine praktisch separate Zufallszahl gebildet wird, deren Entstehung zeitlich und datentechnisch von der dann errechneten und unter Umständen auch nach außen gelangenden Zufallszahl völlig entkoppelt ist. Mit den erfindungsgemäßen Verfahren können daher Zufallszahlen erzeugt werden, die sehr hohen Sicherheitsanforderungen genügen.

Nachfolgend sei das Verfahren an einem Beispiel anhand der Fig. 2 detaillierter erläutert.

In dem gezeigten Ausführungsbeispiel wird zur Erzeugung von Zufallszahlen ein Chiffrieralgorithmus 7 eingesetzt, der einen Startwert S mit Hilfe eines Schlüssels K zu einer Zufallszahl R verschlüsselt. Startwert und Schlüssel sind an den Speicherplätzen 2a und 2b im Speicher 2 abgelegt. Immer wenn eine Zufallszahl angefordert wird, erzeugt der Algorithmus unter Verwendung der aktuellen Werte S und K eine Zufallszahl. Die Erstgrößen für den Startwert und den Schlüsselwert werden mit beliebigen Werten vorbelegt. Diese Werte können entweder über die Tastatur oder über die serielle Schnittstelle eingegeben werden.

Unabhängig von der Erzeugung von Zufallszahlen werden Startwert und Schlüssel immer dann modifiziert, wenn die CPU 5 ein bestimmtes von außen kommendes Ereignis registriert. Ein solches Ereignis führt dazu, daß der augenblickliche Zählerstand eines unabhängig von der CPU durch einen eigenen Takt f inkrementierten Zählers 6 in ein Register 10 übertragen wird, während der Zähler unabhängig davon weiter inkrementiert wird. Bei der Verwendung eines 1-Byte-Zählers und Start- bzw. Schlüsselwerten von mehreren Byte wird jeweils ein Byte der Start- bzw. Schlüsselinformation durch den im Register 10 zwischengespeicherten Wert ersetzt oder mit diesem verknüpft. In dem gezeigten Beispiel wird das dritte Byte des Schlüsselwertes K und das erste Byte des Startwertes S modifiziert. Die CPU 5 registriert die modifizierten Byte-Positionen, so daß bei einem weiteren Ereignis das jeweils nächste Byte der Schlüssel- und Startinformation modifiziert wird. Es besteht auch die Möglichkeit, mehrere oder alle Bytes der Start- und auch der Schlüsselinformation bei einem externen Ereignis zu modifizieren. Das Ereignis kann auch über eine gesonderte Logik in der Verarbeitungseinheit dekodiert und entsprechend weiterverarbeitet werden.

Wie in der Fig. 2 durch strichlierte Linien angedeutet, kann nach jeder Berechnung und Ausgabe einer Zufallszahl diese Zahl sowohl mit dem Schlüsselwert als auch mit dem Startwert, beispielsweise durch eine Modulo-2-Addition, verknüpft den jeweils neuen Startwert bzw. Schlüsselwert bilden. Die Verknüpfung ist in jedem Fall unabhängig von der Modifizierung von Schlüssel- und Startwert gemäß der Erfindung.

## Patentansprüche

1. Verfahren zur Erzeugung von Zufallszahlen mit einer Verarbeitungseinheit (1), die bei jeder Anforderung aus Ein-Eingangsgrößen eine Zufallszahl ermittelt,und einem Speicher (2), in dem die Eingangsgrößen abgelegt sind, dadurch **gekennzeichnet**, daß zumindest Teile der Eingangsgrößen durch Daten modifiziert werden, die unabhängig von der Berechnung der Zufallszahlen und den in diese Berechnung einbezogenen Daten aus von außen auf die Verarbeitungseinheit (1) gelangende Ereignisse ermittelt werden,und daß unter Verwendung der modifizierten Eingangsgrößen die Zufallszahl nach Anforderung erzeugt wird.

2. Verfahren nach Anspruch 1, dadurch **gekennzeichnet**, daß die Daten dem augenblicklichen Wert eines asynchron zur Berechnung von Zufallszahlen laufenden Zählers (6) zum Zeitpunkt des Ereignisses entsprechen.

3. Verfahren nach Anspruch 2, dadurch **gekennzeichnet**, daß der Zählerstand mit jedem Auftreten eines Ereignisses in einen Zwischenspeicher (10) übertragen wird.

4. Verfahren nach Anspruch 1, dadurch **gekennzeichnet**, daß die Daten der augenblicklichen Information auf einer der Verarbeitungseinheit (1) mit peripheren Einrichtungen verbindenden Schnittstelle (4) zum Zeitpunkt des Ereignisses entsprechen.

5. Verfahren nach Anspruch 1, 2 oder 4, dadurch **gekennzeichnet**, daß das Ereignis durch eine bestimmte Eingabe auf einer mit der Verarbeitungseinheit (1) verbundenen Tastatur (3) oder einer bestimmten Schnittstelleninformation ausgelöst wird.

6. Verfahren nach Anspruch 1 dadurch **gekennzeichnet**, daß die Zufallszahlen über einen Chiffrieralgorithmus aus Eingangs- und Schlüsselinformationen bestimmter Länge ermittelt werden und daß wenigstens ein Teil der Eingangs- und/oder Schlüsselinformationen durch den zum Zeitpunkt des Ereignisses ermittelten Wert ersetzt oder mit diesem verknüpft wird.

7. Verfahren nach Anspruch 6, dadurch **gekennzeichnet**, daß die Teile der Eingangs- und/oder Schlüsselinformation in sequentieller Folge jeweils mit dem Erscheinen eines Ereignisses zyklisch modifiziert werden.

8. Schaltungsanordnung zur Erzeugung von Zufallszahlen mit einer Verarbeitungseinheit (1), in der ein Chiffrieralgorithmus implementiert ist,und mit einem Speicher (2), in dem Eingangsgrößen abgelegt sind, wobei bei Anforderung einer Zufallszahl die Verarbeitungseinheit (1) unter Verwendung des Chiffrieralgorithmus und den im Speicher (2) vorhandenen Eingangsgrößen eine Zufallszahl generiert, dadurch **gekennzeichnet**, daß in der Verarbeitungseinheit (1) ein bestimmtes Ereignis definiert ist und daß die Verarbeitungseinheit (1) so ausgebildet ist, daß die im Speicher (2) abgelegten Eingangsgrößen modifiziert werden, wenn von der Verarbeitungseinheit (1) registriert wird, daß ein von außen kommendes Ereignis dem in der Verarbeitungseinheit (1) definierten Ereignis entspricht.

9. Schaltungsordnung nach Anspruch 8, dadurch **gekennzeichnet**, daß das in der Verarbeitungseinheit (1) definierte Ereignis die Betätigung einer bestimmten Taste einer mit der Verarbeitungseinheit verbundenen Tastatur (3) ist.

10. Schaltungsanordung nach Anspruch 8, dadurch **gekennzeichnet**, daß das in der Verarbeitungseinheit (1) definierte Ereignis die Eingabe bestimmter Daten über eine bestimmte, die Verarbeitungseinheit mit peripheren Einrichtungen verbindenen Schnittstelle (4) ist.

11. Schaltungsanordnung nach einem der Ansprüche 8 bis 10, dadurch **gekennzeichnet**, daß die Verarbeitungseinheit (1) einen asynchron zur Berechnung der Zufallszahlen laufenden Zähler (5) enthält und daß die im Speicher (2) abgelegten Eingangsgrößen durch einen Wert modifiziert werden, den der Zähler 6 in dem Moment annimmt, in dem das von außen kommende Ereignis dem in der Verarbeitungseinheit (1) definierten Ereignis entspricht.

12. Schaltungsanordnung nach Anspruch 11, dadurch **gekennzeichnet**, daß die Verarbeitungseinheit (1) einen Zwischenspeicher (10) enthält, in den der zum Zeitpunkt des Ereignisses gültige Zählerstand übermittelt wird.

## Claims

1. A method for generating random numbers with a processing unit (1) for determining a random number from input at each demand, and a memory (2) in which the input is filed, characterized in that at least parts of the input are modified by data that are determined upon events reaching the processing unit (1) from outside, independently of the calculation of the random numbers and of the data included in this calculation, and the random number is generated upon demand using the modified input.

2. The method of claim 1, characterized in that the data correspond, at the time of the event, to the instantaneous value of a counter (6) running asynchronously to the calculation of random numbers.

3. The method of claim 2, characterized in that the counter reading is transferred to an intermediate memory (10) at each occurrence of an event.

4. The method of claim 1, characterized in that the data correspond, at the time of the event, to the instantaneous information on an interface (4) connecting the processing unit (1) with peripheral devices.

5. The method of claim 1, 2 or 4, characterized in that the event is triggered by a certain input to a keyboard (3) connected with the processing unit (1), or by certain interface information.

6. The method of claim 1, characterized in that the random numbers are determined via a ciphering algorithm from input and code information of a certain length, and at least part of the input and/or code information is replaced by the value determined at the time of the event or is linked therewith.

7. The method of claim 6, characterized in that the parts of the input and/or code information are modified cyclically in sequence upon occurrence of an event.

8. A circuit configuration for generating random numbers having a processing unit (I) in which a ciphering algorithm is implemented, and a memory (2) in which input is filed, whereby upon demand for a random number the processing unit (1) generates a random number using the ciphering algorithm and the input present in the memory (2), characterized in that a certain event is defined in the processing unit (1), and the processing unit (1) is designed in such a way that the input filed in the memory (2) is modified when the processing unit (1) registers that an event from outside corresponds to the event defined in the processing unit (1).

9. The circuit configuration of claim 8, characterized in that the event defined in the processing unit (1) is the pressing of a certain key on a keyboard (3) connected with the processing unit.

10. The circuit configuration of claim 8, characterized in that the event defined in the processing unit (1) is the inputting of certain data via a certain interface (4) connecting the processing unit with peripheral devices.

11. The circuit configuration of any of claims 8 to 10, characterized in that the processing unit (1) contains a counter (5) running asynchronously to the calculation of random numbers, and the input filed in the memory (2) is modified by a value assumed by counter (6) at the moment when the event from outside corresponds to the event defined in the processing unit (1).

12. The circuit configuration of claim 11, characterized in that the processing unit (1) contains an intermediate memory (10) to which the counter reading valid at the time of the event is transferred.

## Revendications

1. Procédé de génération de nombres aléatoires, avec une unité de traitement (1), qui, à chaque requête, détermine, à partir de grandeurs d'entrée, un nombre aléatoire et avec une mémoire (2) dans laquelle sont placées les grandeurs d'entrée, caractérisé en ce qu'au moins des parties des grandeurs d'entrée sont modifiées par des données qui ont été déterminées indépendamment du calcul des nombres aléatoires et des données prises en compte dans ce calcul, à partir d'événements arrivant depuis l'extérieur à l'unité de traitement (1), et en ce que, en utilisant les grandeurs d'entrée modifiées ont génère le nombre aléatoire, sur requête.

2. Procédé selon la revendication 1, caractérisé en ce que les données correspondent à la valeur instantanée d'un compteur asynchrone (6), fonctionnant pour calculer des nombres aléatoires, au moment de l'événement.

3. Procédé selon la revendication 2, caractérisé en ce que l'état de comptage est transmis à chaque manifestation d'un événement, dans une mémoire intermédiaire (10).

4. Procédé selon la revendication 1, caractérisé en ce que les données correspondent à l'information instantanée fournie, au moment de l'événement, à une interface (4) reliant l'unité de traitement (1) à des dispositifs périphériques.

5. Procédé selon la revendication 1, 2 ou 4, caractérisé en ce que l'événement est déclenché par une introduction déterminée, faite sur un clavier (3) relié à l'unité de traitement (1), ou bien par une information d'interface déterminée.

6. Procédé selon la revendication 1, caractérisé en ce que les nombres aléatoires sont déterminés par l'intermédiaire d'un algorithme de chiffrage, à partir d'informations d'entrée et de codage, de longueur déterminée, et en ce qu'au moins une partie des informations d'entrée et/ou de codage sont remplacées par la valeur déterminée au moment de l'événement ou bien combinées à celle-ci.

7. Procédé selon la revendication 6, caractérisé en ce que les parties de l'information d'entrée et/ou de codage sont respectivement modifiées, de façon cyclique, en suites séquentielles, avec l'apparition d'un événement.

8. Agencement de commutation par la génération de nombres aléatoires avec une unité de traitement (1), dans laquelle est implémenté un algorithme de chiffrage, et avec une mémoire (2) dans laquelle sont déposées des grandeurs d'entrée, et où sur requête d'un nombre aléatoire, l'unité de traitement (1) génère un nombre aléatoire en utilisant l'algorithme de chiffrage et les grandeurs d'entrée se trouvant dans la mémoire (2), caractérisé en ce qu'un événement déterminé est défini dans l'unité de traitement (1), et en ce que l'unité de traitement (1) est réalisée de telle manière que les grandeurs d'entrée placées dans la mémoire (2) soient modifiées lorsqu'il est enregistré, par l'unité de traitement (1), qu'un événement venant de l'extérieur correspond à l'événement défini dans l'unité de traitement (1).

9. Agencement de commutation selon la revendication 8, caractérisé en ce que l'événement défini dans l'unité de traitement (1) est l'actionnement d'une touche déterminée sur un clavier (3) relié à l'unité de traitement.

10. Agencement de commutation selon la revendication 8, caractérisé en ce que l'événement défini dans l'unité de traitement (1) est l'introduction de données déterminées. par l'intermédiaire d'une interface (4) déterminée, reliant l'unité de traitement à des dispositifs périphériques.

11. Agencement de commutation selon l'une des revendications 8 à 10, caractérisé en ce que l'unité de traitement (1) contient un compteur asynchrone (5) fonctionnant pour calculer les nombres aléatoires, et en ce que les grandeurs d'entrée placés en mémoire (2) sont modifiés par une valeur que prend le compteur (6), à l'instant où auquel l'événement venant de l'extérieur correspond à l'événement défini dans l'unité de traitement (1).

12. Agencement de commutation selon la revendication 11, caractérisé en ce que l'unité de traitement (1) contient une mémoire intermédiaire (10) à laquelle est transmis l'état de compteur valable au moment de l'événement.
